(19) Europäisches Patentamt
European Patent Office
Office européen des brevets

(11) Publication number: 0 107 086 A2

# (12) EUROPEAN PATENT APPLICATION

(21) Application number: 83109640.9

(51) Int. Cl.[3]: C 04 B 13/24

(22) Date of filing: 27.09.83

(30) Priority: 28.09.82 US 425288

(43) Date of publication of application: 02.05.84 Bulletin 84/18

(84) Designated Contracting States: DE FR GB IT NL

(71) Applicant: DIAMOND SHAMROCK CORPORATION, 717 North Harwood Street, Dallas Texas 75201 (US)

(72) Inventor: Holmes, Mark A., 189 Hilltop Drive, Chardon Ohio 44024 (US)
Inventor: Sogor, Bettie V., 7792 Oakhurst Circle, Brecksville Ohio 44141 (US)

(74) Representative: Weickmann, Heinrich, Dipl.-Ing. et al, Patentanwälte Dipl.-Ing. H.Weickmann Dipl.-Phys.Dr. K.Fincke Dipl.-Ing. F.A.Weickmann Dipl.-Chem. B. Huber Dr.-Ing. H. Liska Dipl.-Phys.Dr. J. Prechtel Postfach 860820, D-8000 München 86 (DE)

## (54) Concrete set modification with encapsuled surfactant.

(57) A composition of matter useful for retarding the set time of concrete formulations significantly without adding more water thereto comprises a high molecular weight condensation product of naphthalenesulfonic acid and formaldehyde, preferably an alkali metal salt derivative thereof, which is encapsulated within a matrix of a water-soluble polymer which is polyvinyl alcohol, polyvinyl pyrrolidone, hydroxyethyl cellulose, hydroxypropyl cellulose, or polyacrylamide. By use of such a polymer-encapsulated surfactant, the set time of a concrete formulation can be delayed significantly from that containing the surfactant alone, and the applicability of the concrete formulation can be greatly extended.

VISCOSITY RECOVERY TIME
CEMENT/ADDITIVES

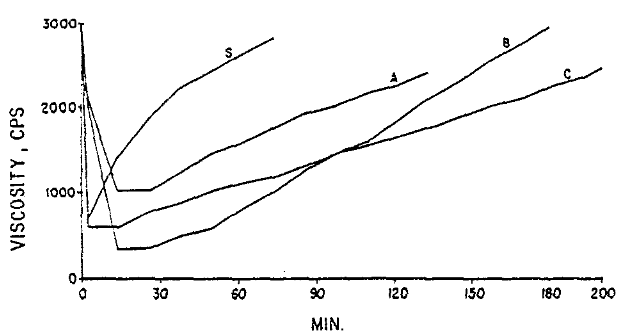


EP 0 107 086 A2

# CONCRETE SET MODIFICATION WITH ENCAPSULATED SURFACTANT

## BACKGROUND OF THE INVENTION

### (1) Field of the Invention

This invention relates to improved hydraulic cement compositions and, more particularly, relates to surfactant-containing cement compositions with significantly retarded hardening rates.

### (2) The Prior Art

It is known that a hydraulic cement comprising cement, water and optionally, aggregate such as sand, gravel or the like will lose fluidity shortly after mixing due to the setting up or curing of the cement. Such loss of fluidity presents problems when attempting to pour the cement composition or to employ it in grouting operations. Loss of fluidity in the cement composition is generally defined in the field as slump loss. When some time must necessarily elapse between mixing and pouring or grouting of the cement material, steps are normally taken to maintain its fluidity by, e.g., adding water thereto. However, addition of water and the simultaneous change in the water to cement ratio results usually in reduced strength of the finished product or structure and increased shrinkage cracks therein. Alternatively and preferably, addition of a set retarding agent during mixing of the cement composition has been adopted. This practice nevertheless has largely been unsatisfactory, since addition of the retarder in quantities sufficient to

maintain the composition's desired fluidity (or slump), oftentimes causes insufficient hardening, or even non-hardening of the cement composition.

More recently, it has been discovered that fluidity loss of cement formulations could be reduced significantly by incorporating any one of several different types of dispersing agents (or surfactants). Accordingly, many such surfactants are employed for the purpose of diminishing slump loss in cement mixtures, while simultaneously reducing the amount of water needed to impart proper fluidity to the mix. In particular, such a surfactant is a salt of condensed naphthalenesulfonic acid, a member of the class of alkyl naphthalene sulfonates having two or more naphthalene rings joined by methylene groups. The preparation and use of an alkali metal salt of a condensation product of naphthalenesulfonic acid as a dispersing agent for cement particles to increase plasticity thereof was perhaps first described in U.S. Patent 2,141,569, issued to Tucker et al December 24, 1938. Similar use of this surfactant is also described, for example, in U.S. Patent 3,954,491, issued May 4, 1976. While reducing the amount of water required to form a workable cement mixture, the sodium salt of said alkyl naphthalene sulfonate performs in this manner only for about one hour after the mixture is prepared. The fluidity of the mix then becomes drastically diminished, thus making pouring of the mix extremely difficult.

It is an object of this invention, therefore, to provide a concrete mixture which will remain pumpable and workable for at least two hours after preparation.

It is another object of this invention to provide an aqueous concrete mixture incorporating, as the gauging water-reducing aid therefore, a controlled release form of the sodium salt of sulfonated naphthaleneformaldehyde condensate.

## SUMMARY OF THE INVENTION

In accordance with this invention, a controlled release form of the sodium salt of sulfonated naphthalene formaldehyde condensate has been prepared by encapsulating said surfactant within a matrix formed from one of certain water-soluble polymers. Use of the encapsulated surfactant prolongs the efficiency thereof to maintain the desired fluidity of concrete mixtures for sufficient time periods, i.e., 2 to 3 hours, so as to allow said concrete mixtures to be easily applied at the particular site being treated.

## BRIEF DESCRIPTION OF THE DRAWINGS

Other advantages of this invention will become apparent upon reading the following detailed description and upon reference to the accompanying drawings. FIG. 1 is a graph showing the extended workability (or viscosity recovery) time of cement mixtures incorporating encapsulated surfactant in comparison to that of a cement mixture containing only nonencapsulated surfactant, which mixture serves as a control; FIG. 2 likewise is a graph which illustrates the viscosity recovery time (or workability time) of a cement mixture containing encapsulated surfactant, in comparison to those which contain only the surfactant or else a physical mixture of said surfactant and said water-soluble polymer.

## DESCRIPTION OF THE PREFERRED EMBODIMENT

The term "cement" as used herein shall refer to silicate cement compositions including Portland cement, hydraulic limes, natural cements and the like. Likewise, by the term "concrete" as used herein is meant a mixture of both coarse and fine aggregates and a cement base which possesses, when hardened, a variable range of strengths for use, e.g., as building materials in the construction industry. The cement base consists of water, cement, and any other components desired or needed for special

property design. The term "slump" as applied in connection with concrete is the distance in inches (cm) a cone of freshly mixed concrete will slump or sag under its own weight. Its "slump" is an indication of the consistency or fluidity of a concrete material, also providing some information as to its comparative pumpability for application at various times after mixing. The term "pumpability" means the ability of a concrete mix to be pumped through a pipeline without causing line blockage by aggregate segregation or excessive bleeding, i.e., by loss of water from the mortar portion of the mix.

As discussed hereinabove, it has previously been found that condensation products of naphthalenesulfonic acid and formaldehyde are useful as surfactants or dispersing agents for cement particles to impart adequate workability to the resulting cement paste with lesser quantities of water and to increase the fluidity thereof. Such dispersing agents, also designated sometimes as superplasticizers, are commercially available. We have now found that salt derivatives of the aforementioned condensates of naphthalenesulfonic acid and formaldehyde will impart the desired extended workability to the cement base mixture if these salts are employed in encapsulated form within a matrix of any one of certain water-soluble polymers described hereinafter. Even though lesser quantities of gauging water may be used in such cement mixtures, the workability thereof lasts substantially longer than those cement mixtures which contain only nonencapsulated surfactant. The term "gauging water" as used herein refers to that quantity of water in addition to the water of reaction which is needed to impart flowable or pumpable consistency to cement (or concrete) formulations. The use of less gauging water provides, of course, stronger finished concrete installations.

The term "salt of a condensation product of naphthalenesulfonic acid and formaldehyde" as used herein refers to an alkali metal salt, such as the sodium and

potassium salts, or an alkaline earth metal salt, such as the calcium salt, of a condensation product of said acid and formaldehyde. Such salts are members of the class of alkyl naphthalene sulfonate condensates having two or more naphthalene rings joined by methylene groups. The structural formula for methylene naphthalenesulfonic acid is:

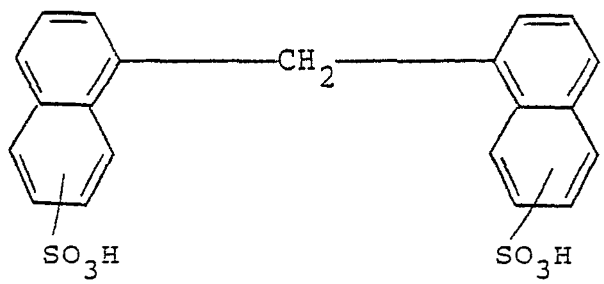

Other members in this class are of indefinite composition and are manufactured by heating naphthalene, formaldehyde and sulfuric acid together or by heating naphthalenesulfonic acid with formaldehyde. In this manner, varying numbers of naphthalene rings may be joined together by methylene groups according to the basic structural formula shown above.

The sodium salts of sulfonated naphthaleneformaldehyde condensates are offered commercially under a variety of trade names and are well known in the art. They have been described heretofore by different chemical names such as the sodium salt of a condensed mono-naphthalenesulfonic acid, the sodium salt of a sulfonated naphthaleneformaldehyde condensate, the sodium salt of condensed naphthalenesulfonic acid and sodium naphthaleneformaldehyde sulfonate.

These products are prepared by reacting formaldehyde and naphthalenesulfonic acid in a mole ratio of 1 to 3 moles of formaldehyde per mole of the sulfonic acid, typically at a temperature in the range of 60° to 100°C, preferably 80° to 100°C. Reaction times will vary depending upon the average molecular weights desired for

the polymeric concentrates prepared. Molecular weight is determined herein by viscosity measurements as described in U.S. Patent 3,277,162 (Johnson), issued October 4, 1966, or alternatively, by gel permeation chromotography. This latter method separates components present in a polymeric material according to their respective effective molecular volumes. For a given homologous polymeric species, molecular volume is directly related to its molecular weight, and as such a plot of a molecular volume profile can be thought of as a plot of a profile of different molecular weights. This procedure is disclosed in detail in U.S. Patent 4,177,243 (Schwartz et al), issued December 4, 1979, which disclosure is incorporated herein by reference.

In accordance with this invention, the efficiency of a sodium naphthaleneformaldehyde sulfonate surfactant, when incorporated into a concrete mixture to reduce the amount of water required to form a workable slurry of said composition, is significantly prolonged or extended by employing the surfactant in encapsulated form. Satisfactory encapsulation media for the surfactant are certain water-soluble polymers which slowly release the surfactant upon dissolution in the water of the concrete composition. Specific water-soluble polymers satisfactory as encapsulating materials herein include polyvinyl alcohol, polyethylene glycol, polyacrylamide, polyvinyl pyrrolidone, hydroxyethyl cellulose, and hydroxypropyl cellulose. Of these, polyvinyl alcohol, polyacrylamide, polyvinyl pyrrolidone and hydroxyethyl cellulose are presently preferred. Depending upon the specific polymer employed, those preferred will have average molecular weights no greater than 100,000, preferably 50,000.

As employed herein, the cement additive usually is prepared by first dissolving the selected polymer in water, then adding the dry surfactant to the polymer solution, and stirring the solution thoroughly to dissolve the surfactant. If necessary, additional water is added

to thin the resulting solution sufficiently so that air bubbles therein will rise to the surface and dissipate.

Generally, from about 1 part by weight of the selected water-soluble matrix polymer is employed for each 1 to 4 parts surfactant by weight. Preferably, the polymer-encapsulated surfactant employed contains by weight 1 part of the polymer for each 2.5 to 3 parts surfactant. Finally, the solution is dried, ground and screened to provide additive particles within a desired particle size range.

In preparing cement formulations, the additive materials of this invention, as ground and screened, are employed in sufficient quantities to provide generally from about 0.10 percent to about 0.30 percent and preferably, 0.15 to 0.20 percent, by weight of the dry cement. Regarding the average particle size of the polymer-encapsulated surfactant material which is suitable, an average particle size ranging from about 500 to 1500 microns generally will retard the setting time of concrete mixtures incorporating them from about 30 percent up to about 200 percent of the setting time of a concrete mixture containing no encapsulated surfactant. Within the aforesaid average particle size range, those mixtures which contain encapsulated surfactant particles with an average particle size range of about 800 to 1400 microns have been found to exert the greatest retardation of the setting time. Encapsulated surfactant materials with an average particle size of 800 to 1400 microns thus are the presently preferred cement additives of this invention.

In contrast to the setting time delays imparted to cement mixtures by the encapsulated surfactant materials of this invention and as graphically illustrated herein, a physical mixture of the surfactant with any one of the encapsulating polymers, when incorporated into a cement mixture, does not normally provide delays in the setting time of the mixtures to the significant degree desired.

Use of the encapsulated surfactant materials of this invention allows the building practitioner to formulate the desired concrete mixtures at a central mixing site and then to transport said fully formulated concrete sizeable distances to the work site where it can easily be applied. The necessity of adding an ingredient to the concrete at the work site, or of metering any ingredient into the concrete while it is being transported to the work site, in order to assure its workability is thus eliminated. An encapsulated additive of this invention releases the surfactant slowly into the concrete mixture as the polymer matrix becomes solubilized in the mix water, thereby prolonging the effectiveness of the surfactant to retard the set time of concrete formulations.

## EXAMPLE 1

Preparation of Encapsulated Surfactant

An aqueous solution containing 45 percent polyvinyl pyrrolidone by weight was prepared. The PVP used was Grade K26-28, with an average molecular weight of approximately 40,000, manufactured by General Anilin and Film. To 50ml of water, 7.13g of the PVP solution was added. The resulting mixture was stirred until a single-phase solution was obtained. Then, 10.15g of a sodium salt of a sulfonated naphthaleneformaldehyde condensate (LOMAR D, manufactured by Process Chemical Div., Diamond Shamrock Corp., Morristown, NJ) was added to 32ml of water. Stirring of this mixture was continued until the surfactant was all dissolved. The surfactant solution was then added to the polymer solution, providing a ratio of 1 part polymer to about 3.17 parts surfactant by weight. Stirring of this mixture was continued until a homogeneous liquid was obtained. The liquid was then vacuum-dried at 66°C. The hard, amber plastic mass resulting was ground and screened to provide a particulate

polymer-encapsulated surfactant with an average particle size of 840 to 1400 microns.

EXAMPLES 2 - 7

Other encapsulated surfactant samples were prepared generally as described above, employing other water-soluble polymers as matrices. In these examples, unless indicated otherwise below, the sodium salt of the sulfonated naphthaleneformaldehyde concentrate, i.e., LOMAR D surfactant, was added to the polymer solution as a dry powder rather than from aqueous solution. After thorough mixing of the polymer and surfactant, each solution was vacuum-dried and ground to obtain particulate, encapsulated surfactant as a homogeneous powder. The results obtained are as follows:

TABLE 1

| Ex. | Matrix Polymer | Polymer g | ml/ $H_2O$ | Surfactant g - ml $H_2O$ | Drying Temp - C° |
|---|---|---|---|---|---|
| 2 | Polyvinyl[a] alcohol | 2.0 | 20 | 6 - 0 | 55 |
| 3 | Polyethylene[b] glycol | 10[g] | 30 | 15 - 0 | 55-60 |
| 4 | Polyacrylamide[c] | 3.1 | - | 30[h] | 55-60 |
| 5 | Carboxymethyl[d] cellulose | 5.0 | 250 | 15 - 0 | 55-60 |
| 6 | Hydroxypropyl[e] cellulose | 3.1 | - | 30[h] | Room Temp. |
| 7 | Hydroxyethyl[f] cellulose | 3.0 | - | 9 - 40 | 50-55 |

a - 20/30 Grade, av. Mol Wt of 10,000 - Monsanto Chemical
b - CARBOWAX 14000 (av. Mol Wt) - Union Carbide
c - CYANOMER P35, av. Mol Wt of 40,000 - American Cyanamid
d - LF Grade, av. Mol Wt of 90,000 - Hercules
e - KLUCEL LF Grade, av. Mol Wt of 100,000 - Hercules
f - NATROSOL 250 - Hercules
g - 10g of 50 wt % aqueous solution
h - 30g of 31 wt % aqueous solution

EXAMPLE 8

As an indication of the efficiency of the polymer-encapsulated surfactant products of Examples 1-7 above to retard the setting time of cement slurries, a viscosity recovery test was conducted. In this test, samples of the aforedescribed surfactant matrices were added to cement slurries and the time required for each cement mix to attain its initial viscosity again was determined. The viscosity recovery time of a cement slurry containing only the surfactant was similarly measured, as a control. The procedure followed for each encapsulated surfactant sample and for the control was as follows:

1. Type I Regular Portland Cement (300g) was added to water (154ml), and the resulting slurry was stirred for 3 minutes.

2. Using a Brookfield Viscometer, Model RVT, with the #2 spindle at 10 rpm. the initial viscosity measurement of this slurry was taken (after 3 revolutions of the dial).

3. Sufficient encapsulated surfactant sample was added to the cement slurry to provide 0.45g surfactant, e.g., 0.6g of a 75 percent LOMAR D surfactant by weight, the time was started, and the slurry was stirred for 1 minute.

4. The viscosity of the slurry was measured as described above.

5. The slurry was allowed to stand for 10 minutes, was then stirred for 1 minute, and the viscosity was again measured.

Step 5, i.e., 10-minute storage, followed by 1 minute stirring and the viscosity measurement, was repeated until the viscosity returned to the initial value.

For comparison, physical mixtures of polymers with LOMAR D were prepared by weighing, in each instance, 0.15g of the selected polymer and 0.45g of LOMAR D into a container and stirring them together. These mixtures were then added to cement slurries and the viscosity recovery time was measured as described hereinabove.

The recovery times obtained for the cement slurry samples are as follows, the values listed representing the average of duplicate runs for each sample:

TABLE 2

| Sample | Polymer | Matrix Mixture | Particle Size Range (microns) | Viscosity Recovery Time-min |
|---|---|---|---|---|
| S (Control) | None | - | - | 77 |
| A | Hydroxyethyl Cellulose | Matrix | 840-1400 | 157 |
| | | Mixture | - | 152 |
| B | Polyvinyl-pyrrolidone | Matrix | 840-1400 | 223 |
| C | Poly-acrylamide | Matrix | 840-1400 | 238 |
| | | Matrix | 500-840 | 182 |
| D | Polyvinyl Alcohol | Matrix | 840-1400 | 161 |
| | | Mixture | - | 110 |
| E | Polyethylene Glycol | Matrix | Not Determined | 154 |
| | | Mixture | - | 125 |
| F | Carboxy-methyl Cellulose | Matrix | 840-1400 | 223 |
| G | Hydroxy-propyl Cellulose | Matrix | 840-1400 | 155 |
| | | Matrix | 500-840 | 117 |
| | | Mixture | - | 121 |

As shown from the above data, the efficiency of a polymer-encapsulated surfactant in retarding the set time of a cement slurry, as indicated by comparative viscosity recovery time measurements thereof is, for the most part, over 200 percent greater than the viscosity recovery time of a cement slurry which incorporates the surfactant alone. Each treated cement slurry, whether containing straight surfactant or a polymer-encapsulated surfactant, has a fairly high viscosity reading initially. All

slurries then become much less viscous due to the presence of the surfactant. The control slurry then regains its initial viscosity in about 77 minutes. The slurries containing polymer-surfactant mixtures are seen to regain their initial viscosity somewhat slower. Those containing the polymer-encapsulated surfactant, however, regain their initial viscosity much slower, i.e., in a time period of 117-238 minutes.

These phenomena are graphically illustrated in accompanying FIGS. 1 and 2. In FIG. 1, the viscosity of the test slurries are plotted against the time elapsed after preparation. The control slurry which contains surfactant only regains its initial viscosity rather quickly as seen by the fairly sharp, steep curve "S." The cement slurries incorporating surfactant encapsulated in hydroxyethyl cellulose, polyvinyl pyrrolidine and polyacrylamide (Samples A, B, and C,respectively) take longer to reach their lowest viscosity and, particularly, to regain their initial viscosity as evidenced by the more oblique, broad curves representing viscosity vs. recovery time for these slurries.

FIG. 2 illustrates the delay in set time imparted to a cement slurry by addition of the surfactant encapsulated in polyvinyl alcohol (Curve E), compared to that imparted by a physical mixture of surfactant and said polymer (Curve M) or by the surfactant alone (Curve S). It is seen that the slurry containing the encapsulated surfactant of this invention does not regain its initial viscosity for almost an hour longer than that containing the physically mixed surfactant and polymer components, a phenomenon which will aid the builder in prolonging the working time of a concrete mixture from its preparation to the application site.

EXAMPLE 9

As a further indication of the retarding effect on the setting time of a concrete mixture imparted by an

encapsulated surfactant additive of this invention, the slump properties of concrete slurries incorporating same were determined.

The slump test employed was according to ASTM Designation C143-78, slump of Portland Cement Concrete. The inside diameter of the metal cone mold used was 7cm at the base and 6cm at its top. Filling of the mold, rodding of the concrete slurry sample, removal of the mold, measuring and recording the slump in the concrete sample were effected following the ASTM method. The slump was measured by determining the vertical difference between the top of the mold and the displaced original center of the top surface of the sample. For the test, a series of concrete slurries containing the surfactant with the same polymer matrix was prepared. After preparation, these samples were stored and the slump was determined after varying periods of time. The results obtained were as follows:

TABLE 3

| Sample | Matrix | Slump (cm) 7 min | 25 min | 50 min | 75 min |
|---|---|---|---|---|---|
| Control | -- | 22.9 | 17.2 | 5.0 | -- |
| 1 | Polyvinyl alcohol | 19.05 | 21.6 | 17.8 | 15.2 |
| 2 | Polyacrylamide | 7.62 | 6.4 | 2.54 | -- |
| 3 | Hydroxyethyl cellulose | 1.91 | 3.18 | 2.54 | -- |

Examination of the above data indicates that those concrete slurries incorporating the surfactant within a polyvinyl alcohol matrix exhibited a greater slump than those containing the surfactant alone throughout the entire time period. Concrete slurries incorporating the surfactant encapsulated in either polyacrylamide or hydroxyethyl cellulose did not exhibit much slump compared

to the control samples. However, such slurries remained workable and pumpable for a substantially longer time period than did the control slurries as indicated by their longer viscosity recovery times (shown in Table 2 above).

WHAT IS CLAIMED IS:

1. A particulate additive composition for retarding the setting time of a cement slurry used to prepare concrete, without incorporating additional water to said slurry to maintain fluidity thereof, which composition consists essentially of a water-soluble, polymer-encapsulated surfactant, said surfactant being an alkali metal salt of a sulfonated naphthaleneformaldehyde condensate, the water-soluble polymer encapsulating said surfactant being selected from the group consisting of polyvinyl pyrrolidone, polyvinyl alcohol, hydroxyethyl cellulose, hydroxypropyl cellulose and polyacrylamide.

2. The composition of Claim 1 in which the surfactant is the sodium salt of a sulfonated naphthaleneformaldehyde condensate.

3. The composition of Claim 1 in which the surfactant-encapsulating polymer is polyvinyl alcohol.

4. The composition of Claim 1 in which the surfactant-encapsulating polymer is polyvinyl pyrrolidone.

5. The composition of Claim 1 in which the surfactant-encapsulating polymer is polyacrylamide.

6. The composition of Claim 1 which contains by weight from 1 to 4 parts surfactant for each part of encapsulating polymer.

7. The composition of Claim 1 which has an average particle size of 500 to 1500 microns.

8. The composition of Claim 1 which is employed in an amount ranging from 0.10 to 0.30 percent by weight of dry cement.

9. The composition of Claim 6 which contains by weight from 2.5 to 3 parts surfactant for each part of encapsulating polymer, said composition having an average particle size of 800 to 1400 microns.

10. The composition of Claim 1 in which the surfactant-encapsulating polymer employed has a maximum average molecular weight of 100,000.

11. The composition of Claim 10 in which the surfactant-encapsulating polymer has an average molecular weight no greater than 50,000.

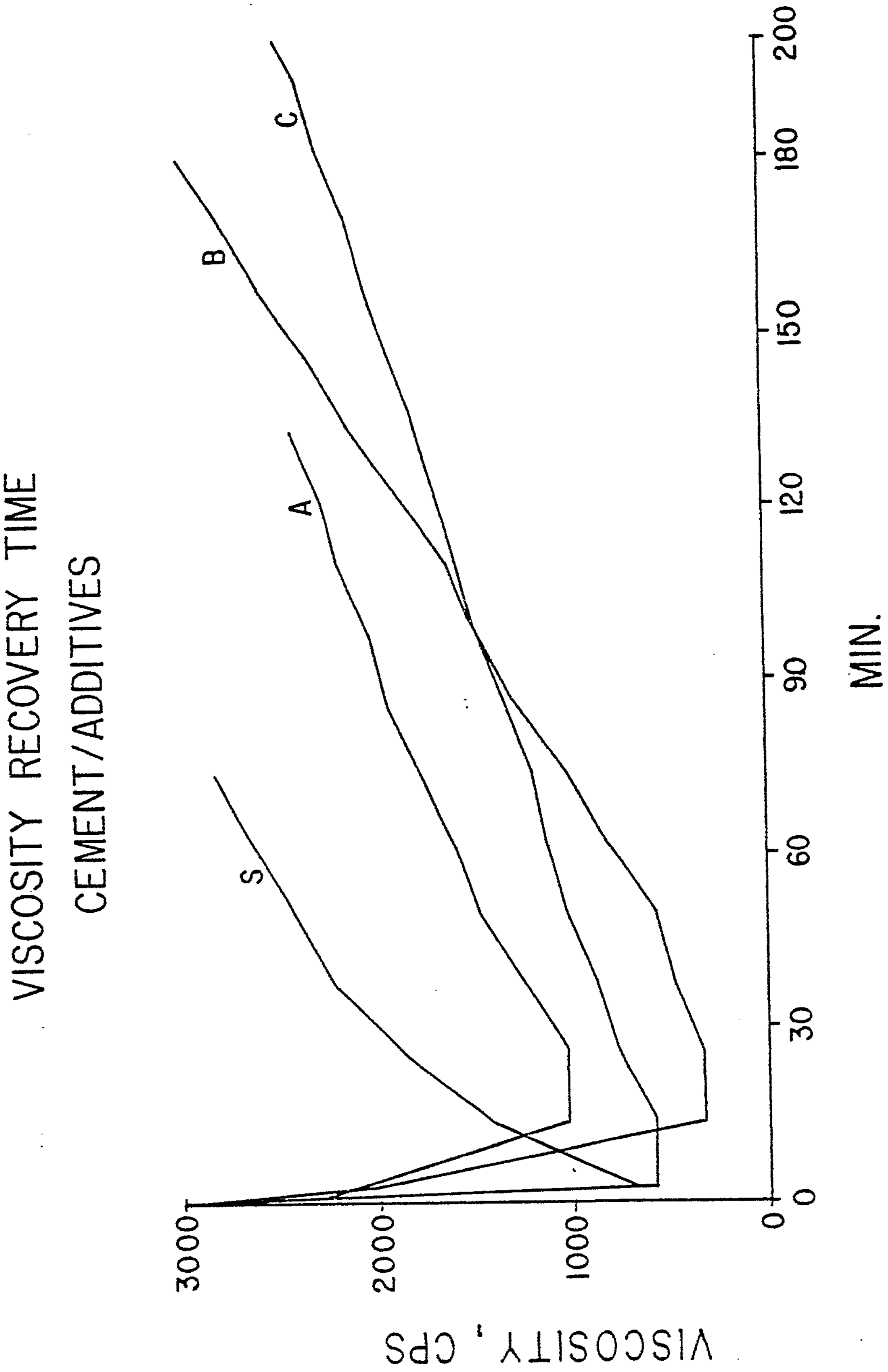
VISCOSITY RECOVERY TIME
CEMENT/ADDITIVES
S
A
B
C
VISCOSITY, CPS
3000
2000
1000
0
0
30
60
90
120
150
180
200
MIN.

FIG. 1

VISCOSITY RECOVERY TIME
CEMENT W/SURFACTANT MATRIX
vs MIXTURE

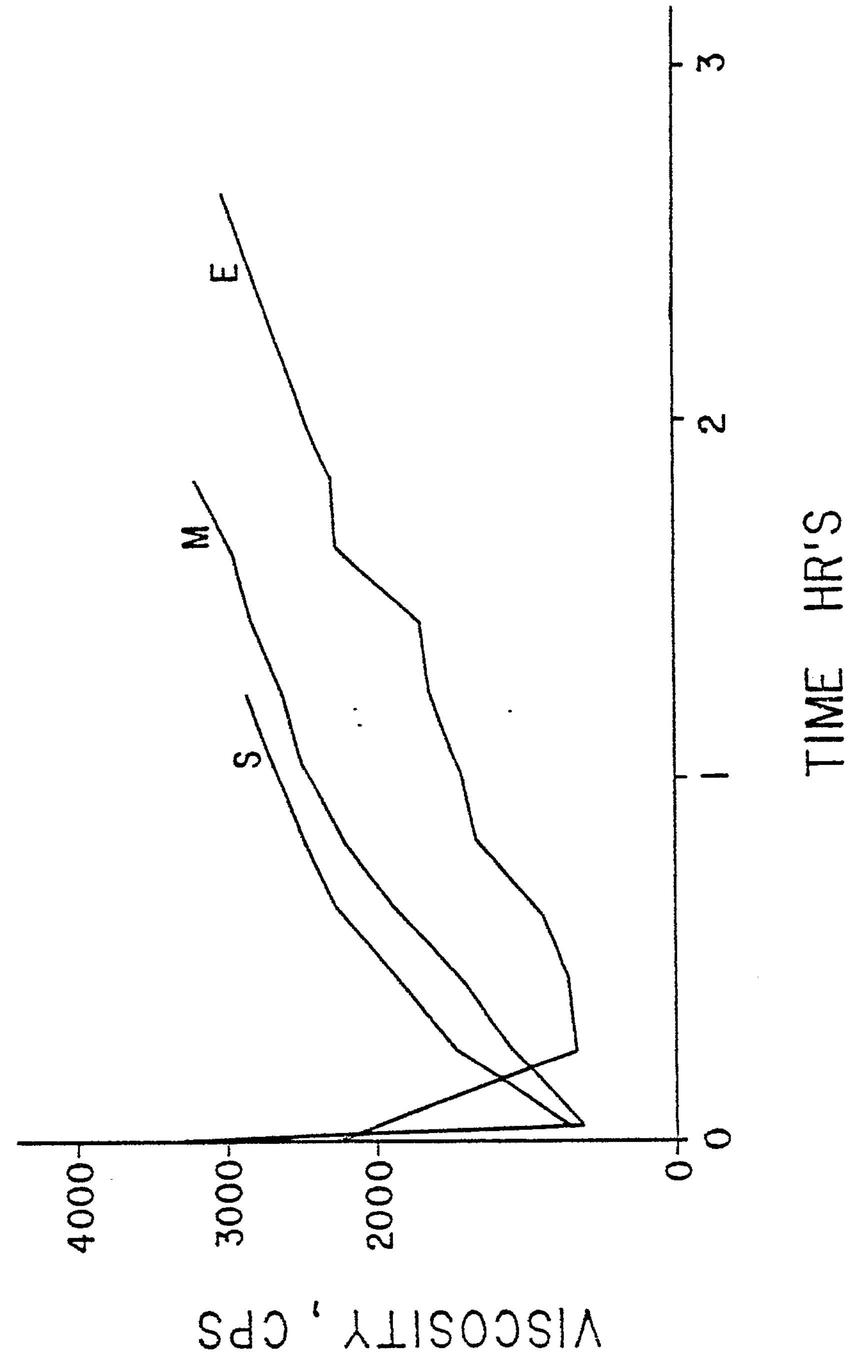


FIG. 2